Europäisches Patentamt

European Patent Office

Office européen des brevets

(11) Numéro de publication: **0 345 174**
A1

## (12) DEMANDE DE BREVET EUROPEEN

(21) Numéro de dépôt: 89420185.4

(22) Date de dépôt: 29.05.89

(51) Int. Cl.⁴: **B 65 D 13/00**
B 65 D 65/38, B 65 D 85/72

(30) Priorité: 01.06.88 FR 8807731

(43) Date de publication de la demande:
06.12.89 Bulletin 89/49

(84) Etats contractants désignés:
AT BE CH DE ES FR GB GR IT LI LU NL SE

(71) Demandeur: F EN F AMANRICH (Société Anonyme de
droit francais)
51, rue Latécoère
F-26000 Valence (FR)

(72) Inventeur: Amanrich, François
51, rue Latécoère
F-26000 Valence (FR)

(74) Mandataire: Maureau, Philippe et al
Cabinet GERMAIN & MAUREAU BP 3011
F-69392 Lyon Cédex 03 (FR)

(54) **Procédé de fabrication d'un récipient en forme de bouteille, et récipient obtenu par ce procédé.**

㊐ Procédé de fabrication d'un récipient à partir d'un tronçon de canne de bambou obtenu par deux découpes ménagées sur toute la section de la canne, perpendiculairement à son axe, à l'extérieur de deux noeuds adjacents (3).

Selon l'invention, ce procédé consiste à réaliser une découpe (10) du tube sur toute sa section entre les deux noeuds (3), à réaliser un perçage (9) dans l'un des plateaux (4), à placer un récipient (12) en matériau étanche à l'intérieur du tube, en positionnant son dispositif de versage (13) dans le perçage (9), puis à resolidariser les deux parties du tube.

FIG_3

EP 0 345 174 A1

Description

# PROCEDE DE FABRICATION D'UN RECIPIENT EN FORME DE BOUTEILLE, ET RECIPIENT OBTENU PAR CE PROCEDE

La présente invention a pour objet un procédé de fabrication d'un récipient en forme de bouteille, et un récipient obtenu par ce procédé.

Il est traditionnel d'utiliser des bouteilles en verre pour le conditionnement de liquides et plus spécialement de liquides alimentaires, tels que des boissons alcoolisées ou non. Quoique ces bouteilles puissent avoir des formes différentes les une des autres, elles ne permettent pas en elles-mêmes de parfaitement différencier les produits qu'elles contiennent, nécessitant la mise en oeuvre d'une ou plusieurs étiquettes par bouteille, qui sont pour leur part distinctives des produits.

Il existe également d'autres types de conditionnements, métalliques ou en matière synthétique, qui présentent toutefois l'inconvénient de ne pas être d'une esthétique très agréable et de mal valoriser les produits qu'ils contiennent.

Il est également connu d'utiliser des récipients constitués par des noix de coco ou des tronçons de canne de bambou, comme décrit dans le brevet français 83.10 853. Il s'agit dans un tel cas de ménager une ouverture dans une enveloppe puis de recouvrir la face intérieure de celle-ci d'une couche de produit imperméable avant le conditionnement du liquide. Cette technique est complexe à mettre en oeuvre, notamment pour l'obtention d'une bonne étanchéité du récipient. D'autre part, dans le cas de cannes de bambou, la distance entre deux noeuds adjacents n'est pas constante, ce qui ne permet pas une régularité des récipients en ce qui concerne tant leur forme que leur volume.

La présente invention vise à remédier à ces inconvénients en fournissant un récipient en forme de bouteille, dont la forme et la structure sont particulièrement esthétiques et distinctives, dont la technique de réalisation est simple, et dont le prix de revient est modéré.

A cet effet, elle concerne un procédé de fabrication d'un récipient en forme de bouteille, à partir d'un tronçon de canne de bambou obtenu par deux découpes ménagées sur toute la section de la canne, perpendiculairement à son axe, à l'extérieur de deux noeuds adjacents, afin d'obtenir un tube obturé par deux plateaux situés au niveau des noeuds, au-delà desquels s'étendent deux collerettes cylindriques, caractérisé en ce qu'il consiste à réaliser une découpe du tube sur toute sa section entre les deux noeuds, à réaliser un perçage dans l'un des plateaux, à placer un récipient en matériau étanche à l'intérieur du tube, en positionnant son dispositif de versage dans le perçage, puis à resolidariser les deux parties du tube.

La partie tubulaire du tronçon de canne forme la paroi de la bouteille, tandis que les plateaux forment, respectivement, le fond et la partie constitutive du goulot. La stabilité de la bouteille en position debout sur un support est excellente, puisqu'elle ne repose pas sur celui-ci par son fond, qui est plus ou moins régulier, mais par la collerette cylindrique, qui s'étend au-delà du fond.

L'étanchéité est réalisée par le récipient en matériau étanche qui est avantageusement rigide et qui intègre le bec verseur.

Avantageusement, ce procédé consiste à réaliser la découpe du tronçon de canne plus près du plateau comportant l'ouverture que de l'autre plateau.

Cet agencement limite la fragilisation du récipient par la découpe intermédiaire, en éloignant cette découpe du fond du récipient, ce qui permet à celui-ci de mieux résister à une chute par basculement sur le support sur lequel il est posé.

En outre, le corps de la bouteille se trouve donc situé dans la partie de plus grande longueur du tronçon de canne de bambou, ce qui favorise la solidité de l'ensemble, d'autant plus que la bouteille peut être collée dans le tube.

La ligne de contact entre les deux parties du tube est de préférence recouverte par un manchon, qui renforce la solidarisation par collage des deux parties du tube, tout en ayant un rôle décoratif en redonnant l'aspect d'un tube homogène.

Selon un autre mode de mise en oeuvre, ce procédé consiste à réaliser, entre deux noeuds, deux découpes perpendiculaires à l'axe du tube et sur toute la section de celui-ci, puis à solidariser les extrémités des deux parties de tube présentant les noeuds.

Ceci permet de réaliser des bouteilles ayant toutes la même hauteur, de l'ordre de 30 centimètres, en partant de cannes de bambou dont l'écartement des noeuds est variable. Il suffit de retirer un tronçon intermédiaire de longueur correspondant à la différence de longueur entre l'écartement entre deux noeuds et la hauteur de bouteille souhaitée.

De toute façon, l'invention sera bien comprise à l'aide de la description qui suit, en référence au dessin schématique annexé représentant, à titre d'exemples non limitatifs, plusieurs formes d'exécution de ce récipient, et illustrant différentes phases d'obtention de celui-ci :

Figure 1 est une vue en coupe longitudinale d'une partie de canne de bambou ;

Figure 2 est une vue en coupe longitudinale d'un tronçon de canne destiné à la réalisation d'un récipient ;

Figure 3 est une vue en coupe longitudinale d'un récipient fini ;

Figure 4 est une vue en coupe longitudinale d'un tronçon de bambou dont la mise en oeuvre pour l'obtention d'un récipient constitue une variante de celui de figure 2.

La figure représente un tronçon de canne de bambou désigné par la référence générale 2.

Comme cela ressort du dessin, une canne de bambou possède une paroi tubulaire de laquelle font saillie, à intervalles réguliers, des noeuds 3. Au niveau de chaque noeud, l'intérieur de la canne 2 est obturé par un plateau 4 de forme plus ou moins plane.

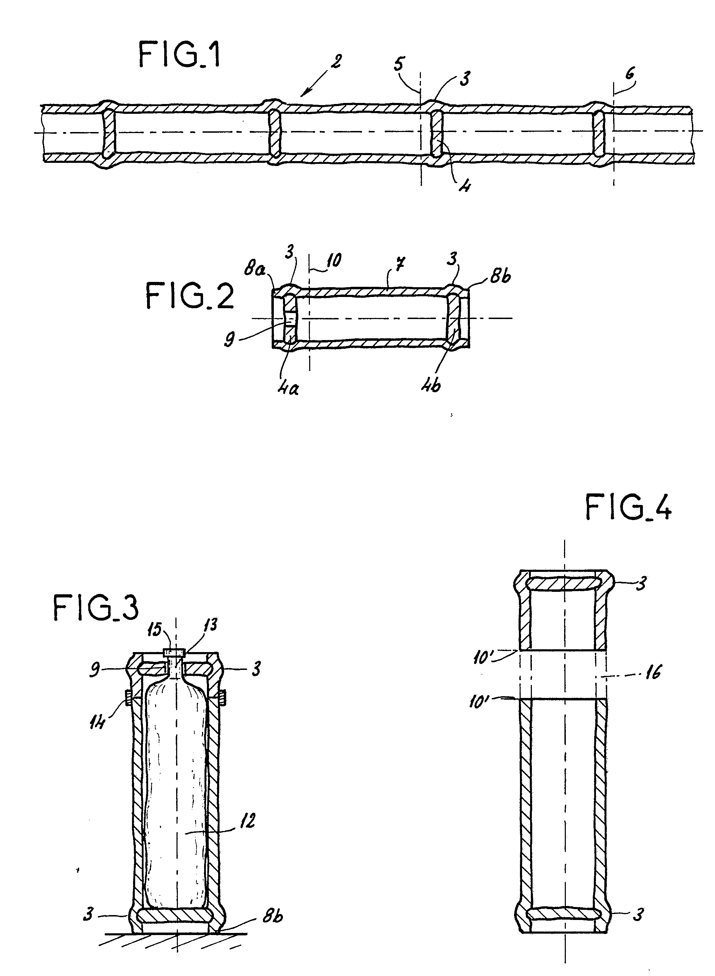

Le procédé selon l'invention consiste, partant d'une canne de bambou, telle que celle 2 représentée au dessin, à réaliser, deux découpes 5 et 6 de la canne sur toute sa section et perpendiculairement à son axe, à l'extérieur de deux noeuds adjacents, afin d'obtenir, comme montré à la figure 2, un tube 7 obturé par deux plateaux 4a,4b situés au niveau de deux noeuds, au-delà desquels s'étendent deux collerettes cylindriques 8a,8b.

Dans le plateau 4a, est ménagé au centre de celui-ci, un perçage 9. A proximité du plateau 4a est ménagée, entre les deux noeuds 3 correspondant aux plateaux 4a et 4b, une découpe 10 perpendiculaire à l'axe du tube 7, et sur toute la section de celui-ci.

Il est ainsi possible, par découpe du tube, d'avoir accès à l'intérieur du volume de celui-ci. Cela permet de glisser, à l'intérieur du tube, une outre ou bouteille 12 réalisée en une matière étanche et satisfaisant au critère de conditionnement de produits alimentaires, dont le col 13 est bloqué dans le perçage 9 du plateau 4a.

Après mise en place de l'outre 12, les deux parties de tube sont réaboutées au niveau de la découpe 10 et fixées par exemple par collage.

Un manchon 14 recouvre la zone de jonction entre les deux parties du tube, ce manchon 14 pouvant, avantageusement, être choisi pour former un élément décoratif du récipient obtenu. Le récipient peut alors être rempli d'un liquide tel qu'un alcool, avant d'être équipé d'un bouchon de fermeture 15.

Comme montré au dessin, la collerette 8b, située à la partie inférieure du récipient, constitue un piètement parfaitement stable pour un appui sur un support.

La figure 4 représente une variante d'obtention de ce récipient. Il faut, en effet, considérer que la distance entre les noeuds d'une canne de bambou n'est pas constante d'une canne à une autre, même pour un diamètre déterminé. Or, il est souhaitable, dans un souci d'industrialisation, d'obtenir des récipients qui possèdent tous la même hauteur. Une solution consiste donc à partir de cannes de bambou dont l'écartement entre deux noeuds consécutifs est supérieur à la hauteur souhaitée pour les récipients.

Dans un tel cas, il convient, comme montré à la figure 4, de pratiquer non pas une découpe 10, mais deux découpes 10' parallèles l'une à l'autre et situées à une distance l'une de l'autre égale à la différence entre la longueur du tronçon de bambou obtenu par les deux découpes 5,6 et la longueur souhaitée pour le récipient. Les deux découpes 10' délimitent un tronçon de tube 16 qui est purement et simplement retiré avant de réaliser, l'outre étant mise en place, un aboutement des deux parties du tube comportant les noeuds 3.

Comme il ressort de ce qui précède, l'invention apporte une grande amélioration à la technique existante en fournissant un récipient de conception simple, d'un prix de revient avantageux et qui possède une esthétique très agréable permettant, indépendamment de toute décoration pouvant être réalisée à l'aide d'étiquettes ou autres, une excellente mise en valeur des produits conditionnés. Un tel récipient convient donc particulièrement bien pour le conditionnement d'alcools précieux, de jus de fruits ou de sirops de bonne qualité.

## Revendications

1 - Procédé de fabrication d'un récipient en forme de bouteille, à partir d'un tronçon de canne de bambou obtenu par deux découpes (5,6) ménagées sur toute la section de la canne, perpendiculairement à son axe, à l'extérieur de deux noeuds adjacents (3), afin d'obtenir un tube obturé par deux plateaux (4) situés au niveau des noeuds, au-delà desquels s'étendent deux collerettes cylindriques (8a,8b), caractérisé en ce qu'il consiste à réaliser une découpe (10) du tube sur toute sa section entre les deux noeuds (3), à réaliser un perçage (9) dans l'un des plateaux (4), à placer un récipient (12) en matériau étanche à l'intérieur du tube, en positionnant son dispositif de versage (13) dans le perçage (9), puis à resolidariser les deux parties du tube.

2 - Procédé selon la revendication 1, caractérisé en ce qu'il consiste à réaliser la découpe (10) du tronçon de canne plus près du plateau (4a) comportant l'ouverture (9) que de l'autre plateau (4b).

3 - Procédé selon la revendication 2, caractérisé en ce qu'il consiste à réaliser la fixation par collage du récipient (12) à l'intérieur du tube.

4 - Procédé selon l'une quelconque des revendications 1 à 3, caractérisé en ce qu'il consiste à réaliser la resolidarisation des deux parties du tube par collage.

5 - Procédé selon la revendication 4, caractérisé en ce qu'il consiste à recouvrir la ligne de contact entre les deux parties du tube par un manchon (14).

6 - Procédé selon l'une quelconque des revendications 1 à 5, caractérisé en ce qu'il consiste à réaliser, entre deux noeuds (3), deux découpes (10') perpendiculaires à l'axe du tube et sur toute la section de celui-ci, puis à solidariser les extrémités des deux parties de tube présentant les noeuds (3).

7 - Récipient en forme de bouteille, caractérisé en ce qu'il est constitué par un tronçon de tube de bambou comportant une partie cylindrique, deux noeuds adjacents (3), deux collerettes (8a,8b) disposées au-delà des noeuds, la collerette (8b) formant piètement pour appui sur un support, un perçage (9) étant ménagé dans le plateau (4) associé aux noeuds (3) situés du côté de la collerette (8a), pour le montage d'un dispositif de versage appartenant à un récipient étanche monté à l'intérieur du tube.

FIG_1

FIG_2

FIG_4

FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 548 147  (AMANRICH)<br>* Page 3, lignes 17-32; figure 2 *<br>--- | 1,2,4-7 | B 65 D  13/00<br>B 65 D  65/38<br>B 65 D  85/72 |
| A | FR-A-  634 643  (SCHLUMBOHM)<br>* Page 1, lignes 23-31,47-52; page 2, lignes 33-34; figure *<br>----- | 1,2,4-7 | |

| | |
|---|---|
| | DOMAINES TECHNIQUES RECHERCHES (Int. Cl.4) |
| | B 65 D |

Le présent rapport a été établi pour toutes les revendications

| Lieu de la recherche | Date d'achèvement de la recherche | Examinateur |
|---|---|---|
| LA HAYE | 04-09-1989 | LEONG C.Y. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.............................................................................
& : membre de la même famille, document correspondant

EPO FORM 1503 03.82 (P0402)